(19) Europäisches Patentamt / European Patent Office / Office européen des brevets

(11) **EP 4 756 741 A1**

(12) **EUROPEAN PATENT APPLICATION**

(43) Date of publication:
**10.06.2026 Bulletin 2026/24**

(21) Application number: **25216898.4**

(22) Date of filing: **19.11.2025**

(51) International Patent Classification (IPC):
***G06V 20/56*** *(2022.01)* ***G06V 20/58*** *(2022.01)*

(52) Cooperative Patent Classification (CPC):
**G06V 20/56; G06V 20/58**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **04.12.2024 JP 2024210991**

(71) Applicant: **Toyota Jidosha Kabushiki Kaisha**
**Toyota-shi, Aichi-ken 471-8571 (JP)**

(72) Inventor: **KASHIWABARA, Kenjiro**
**Toyota-shi, 471-8571 (JP)**

(74) Representative: **J A Kemp LLP**
**80 Turnmill Street**
**London EC1M 5QU (GB)**

(54) **IMAGE RECORDING DEVICE INCLUDING A CLARITY DETERMINATION UNIT**

(57) The image recording device includes a recording determination unit configured to determine whether or not an image recording condition for recording the captured image has been satisfied based on a situation of the vehicle, a clarity determination unit configured to determine whether or not a recording exclusion object included in the captured image has been clearly captured, and a storage control unit. The storage control unit does not cause the storage unit to store the captured image when the clarity determination unit determines that the recording exclusion object has been clearly captured even if the recording determination unit determines that the image recording condition has been satisfied.

***Fig.1***

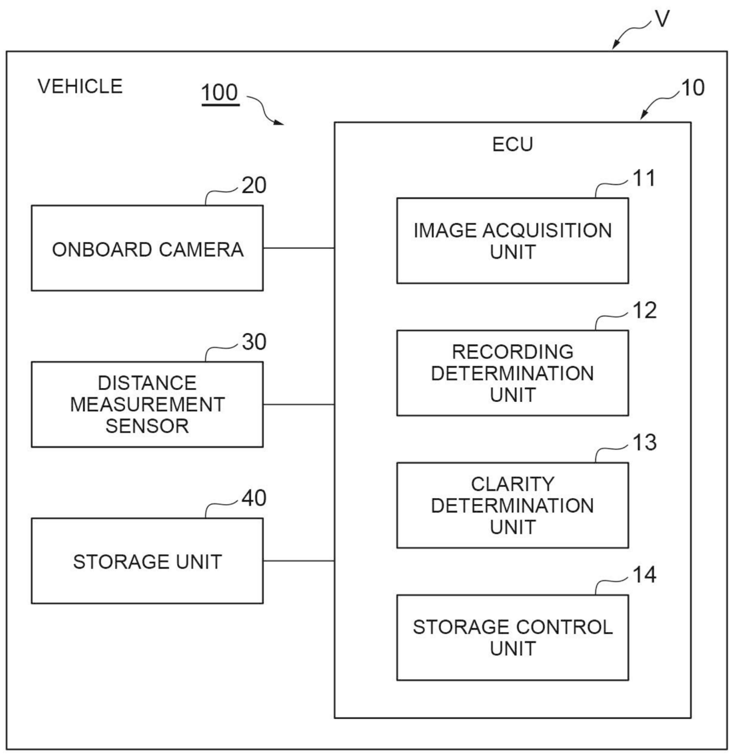




Processed by Luminess, 75001 PARIS (FR)

## Description

### CROSS-REFERENCE TO RELATED APPLICATIONS

This application is based upon and claims the benefit of priority from Japanese Patent Application No. 2024-210991, filed on December 4, 2024, the entire contents of which are incorporated herein by reference.

### TECHNICAL FIELD

The present disclosure relates to an image recording device that records captured images of the surroundings of a vehicle.

### BACKGROUND

For example, Japanese Unexamined Patent Publication No. 2023-180929 describes an image recording device that records captured images of surroundings of a vehicle captured by an onboard camera. The device stores the captured images of the onboard camera in a storage unit when a predetermined specific event has occurred.

### SUMMARY

For example, also if a specific event that causes the storage of captured images occurs, there may be a need for a process to protect the privacy of a specific object according to a distance between a vehicle and the specific object. For this reason, the present disclosure describes an image recording device capable of recording captured images while considering the privacy of a recording exclusion object.

An aspect of the image recording device according to the present disclosure is [1] "an image recording device that is mounted on a vehicle and records captured images of surroundings of the vehicle captured by an onboard camera, the image recording device comprising: a recording determination unit configured to determine whether or not an image recording condition for recording the captured image has been satisfied based on a situation of the vehicle; a clarity determination unit configured to determine whether or not a recording exclusion object included in the captured image has been clearly captured; and a storage control unit configured to perform control for storing the captured image in a storage unit when the recording determination unit determines that the image recording condition has been satisfied, wherein the storage control unit does not cause the storage unit to store the captured image when the clarity determination unit determines that the recording exclusion object has been clearly captured even if the recording determination unit determines that the image recording condition has been satisfied."

In this image recording device, the recording determination unit determines whether or not the recording exclusion object has been clearly captured in the captured image. The storage control unit does not cause the storage unit to store the captured image when it is determined that the recording exclusion object has been clearly captured even if it is determined that the image recording condition has been satisfied. When it is determined that the image recording conditions are satisfied and it is determined that the recording exclusion object has not been clearly captured, the storage control unit causes the storage unit to store the captured image. Thus, the image recording device stores the captured image in the storage unit according to whether or not the recording object has been clearly captured. Thereby, the image recording device can record the captured images while considering the privacy of the recording exclusion object.

The above-described image recording device may be [2] "the image recording device according to [1], wherein the clarity determination unit determines that the recording exclusion object has not been clearly captured when a distance between the onboard camera and the recording exclusion object is greater than a predetermined distance threshold and determines that the recording exclusion object included in the captured image has been clearly captured when the distance between the onboard camera and the recording exclusion object is less than or equal to the predetermined distance threshold." For example, when the distance from the onboard camera to the recording exclusion object has increased, the recording exclusion object in the captured image is more likely to be unclear. Therefore, by using the distance between the onboard camera and the recording exclusion object, the image recording device can more appropriately determine whether or not the recording exclusion object has been clearly captured.

The above-described image recording device may be [3] "the image recording device according to [2], wherein the distance threshold is defined based on the number of pixels in at least one of vertical and horizontal directions of the recording exclusion object in the captured image." For example, even if the distance from the onboard camera to the recording exclusion object is the same, the recording exclusion object may be clearly captured or unclear according to the performance of the onboard camera. For this reason, the clarity determination unit uses the distance threshold determined based on the number of pixels of the recording exclusion object in the captured image. Thereby, the image recording device can determine whether or not the recording exclusion object has been clearly captured and record the captured

image using a distance threshold defined in consideration of the performance of the onboard camera and record the captured image.

The above-described image recording device may be [4] "the image recording device according to any one of [1] to [3], wherein the storage control unit stops control for storing the captured image in the storage unit when the clarity determination unit determines that the recording exclusion object has been clearly captured while control for storing the captured image in the storage unit is being performed." In this case, the image recording device can switch between the presence and absence of recording of the captured image in accordance with a change in the clarity degree of the recording exclusion object in the captured image.

The above-described image recording device may be [5] "the image recording device according to any one of [1] to [4], wherein the recording exclusion object is a human face or a license plate of another vehicle." In this case, the image recording device does not record captured images captured in a state in which a human face or the license plate of another vehicle is clear, thus protecting their privacy.

The above-described image recording device may be [6] "the image recording device according to any one of [1] to [5], wherein the image recording condition is an operation condition for a driving assistance function related to steering or a speed of the vehicle." In this case, the image recording device can record the captured images so that the external situation at the time of operation of the driving assistance function can be checked later, while considering the privacy of the recording exclusion object.

According to an aspect of the present disclosure, it is possible to record captured images while considering the privacy of a recording exclusion object.

## BRIEF DESCRIPTION OF THE DRAWINGS

FIG. 1 is a block diagram showing an example of an image recording device according to an embodiment.

FIG. 2 is an explanatory diagram of a relationship between a distance from an onboard camera to a recording exclusion object and the number of pixels of the recording exclusion object in a captured image.

FIG. 3 is a diagram showing a state in which an original image is compressed.

FIG. 4A is a diagram showing a positional relationship between the vehicle and another vehicle when the captured image is recorded.

FIG. 4B is a diagram showing a positional relationship between the vehicle and another vehicle when the captured image is not recorded.

FIG. 5 is a flowchart showing a flow of a recording process for a captured image in the image recording device.

## DETAILED DESCRIPTION

Hereinafter, exemplary embodiments will be described with reference to the drawings. In addition, the same reference signs are used for the same or corresponding elements in the drawings, and redundant descriptions will be omitted.

As shown in FIG. 1, an image recording device 100 is mounted on a vehicle V (host vehicle). The image recording device 100 records captured images of surroundings of a vehicle V captured by an onboard camera 20. The image recording device 100 includes an electronic control unit (ECU) 10 that comprehensively manages the device. The ECU 10 is a central processing unit (CPU) and an electronic control unit with a storage unit. The storage unit includes, for example, a read-only memory (ROM), a random-access memory (RAM), an electrically erasable programmable read-only memory (EEPROM), and the like. In the ECU 10, for example, various types of functions are implemented by the CPU executing a program stored in the storage unit. The ECU 10 may include a plurality of electronic control units.

The ECU 10 is connected to an onboard camera 20, a distance measurement sensor 30, and a storage unit 40. The onboard camera 20 is an imaging device that captures images of surroundings of the vehicle V. The onboard camera 20 may include one or more cameras mounted on the vehicle V. The onboard camera 20 may, for example, capture images of the front, the left, the right, and the rear with respect to the vehicle V, and the like. The onboard camera 20 may include a camera capable of capturing a wide range of images such as, for example, a camera with a fisheye lens.

The distance measurement sensor 30 is a sensor capable of measuring a distance between the vehicle V and a physical object near the vehicle V. The distance measurement sensor 30 may be, for example, a radar sensor or a sonar sensor. The radar sensor is a detection device that uses radio waves (e.g., millimeter waves) or light to detect a physical object near a vehicle. The radar sensor includes, for example, a millimeter wave radar or a light detection and ranging (LIDAR). The radar sensor detects a physical object by transmitting radio waves or light around the vehicle and receiving the reflected radio waves or light from the physical object. The radar sensor is a sensor capable of measuring a distance from a physical object based on a period of time from the transmission of radio waves or light to the reception of the

reflected waves. The sonar sensor transmits sound waves around the vehicle V and receives the reflected waves (sound waves) reflected by the physical object. The sonar sensor is a sensor that can measure the distance from the physical object based on a period of time between the transmission and reception of sound waves.

Moreover, a stereo camera may be used as the distance measurement sensor 30. Two or more cameras included in the onboard camera 20 may be used as the stereo camera. The stereo camera is a device in which two cameras are placed at regular intervals to acquire three-dimensional visual information, just like the human eye. When the stereo camera is used, the distance from the physical object can be measured using a difference (parallax) between the images captured by the two cameras. However, the type of sensor for the distance measurement sensor 30 is not particularly limited. Any sensor capable of measuring the distance from the physical object is acceptable.

The storage unit 40 is a storage medium that stores the captured images captured by the onboard camera 20. The storage unit 40 stores the images captured by the onboard camera 20 based on an instruction of the storage control unit 14 of the ECU 10. In addition, the storage unit 40 may be mounted on the vehicle V or provided on a server outside the vehicle V or the like. The type of the storage unit 40 is not particularly limited.

Functionally, the ECU 10 has an image acquisition unit 11, a recording determination unit 12, a clarity determination unit 13, and a storage control unit 14. The image acquisition unit 11 acquires images captured by the onboard camera 20. For example, the image acquisition unit 11 acquires a captured image in real time every time an image is captured by the onboard camera 20.

The recording determination unit 12 determines whether or not an image recording condition for recording the image captured by the onboard camera 20 is satisfied based on a situation of the vehicle V. The image recording condition is predefined. The image recording condition is a condition for storing the captured image in the storage unit 40 when this condition is satisfied.

The image recording condition may be an operation condition of the driving assistance function of the vehicle V. For example, a driving assistance function may be assistance related to the steering or speed of the vehicle V, performed by a driving assistance unit that can control the travel of the vehicle V. For example, the driving assistance function may be a collision avoidance function of decelerating the vehicle V to prevent a distance between a vehicle or a physical object in a forward direction and the vehicle V from being excessively short, a lane keeping assistance function of keeping the vehicle V traveling along a travel lane (white line), or a speed control assistance function of controlling the speed of the vehicle V so that the vehicle V tracks a vehicle in the forward direction or travels at a predetermined speed. The image recording condition may be one when the occupant (driver) of the vehicle V performs an intervention operation (an intervention operation related to the steering or speed or the like) for the driving assistance function while the driving assistance function is being executed. The recording determination unit 12 can acquire, for example, from the driving assistance unit, whether or not the operation condition of the driving assistance functions of the vehicle V has been satisfied and whether or not the intervention operation has been performed.

Moreover, the image recording condition may also be a state of the vehicle V in which there is a driver who is unable to perform a driving operation or who is unable to properly perform a driving operation. For example, the recording determination unit 12 can determine whether or not the state is a state in which the driver is unable to perform a driving operation or is unable to properly perform a driving operation (e.g., falling asleep, looking aside, or the like) based on the images captured by a driver monitor camera that monitors the state of the driver of the vehicle V. For example, the recording determination unit 12 can determine the driver's state based on the driver's posture, the presence or absence of movement of the driver, and a direction of the driver's face obtained based on the driver's captured image.

The image recording condition may be a state of the vehicle V in which a signal requesting external assistance or an SOS signal notifying the outside world that an abnormality has occurred is transmitted by the occupant. The recording determination unit 12 may determine whether or not a signal for help to the outside world or an SOS signal notifying the outside world that an abnormality has occurred has been transmitted based on a signal transmission operation (e.g., pressing a button or the like) by the occupant of the vehicle V.

In addition, as the image recording condition, a case where another physical object (such as a person or another vehicle) has approached to within a predetermined range of the vehicle V, a case where an impact of a predetermined magnitude or more has occurred in the vehicle V, and the like may be defined.

The clarity determination unit 13 determines whether or not the recording exclusion object in the image captured by the onboard camera 20 has been clearly captured. Here, the recording exclusion object can be an object or a part that is not desired to be identifiable in the captured image. In other words, the recording object may be an object or part that requires privacy to be protected. The recording exclusion object is predefined. In the present embodiment, as an example, a human face and a license plate of another vehicle are set as the recording exclusion object. However, either a human face or the license plate of another vehicle may be set as a recording exclusion object, or any other object or part thereof may be set. The clarity determination unit 13 can recognize the presence or absence of the recording exclusion object, its size, and the like from the captured images of the onboard camera 20 using a well-known image processing technique. Moreover, the clarity determination unit 13 may use the detection results of the distance measurement sensor 30 to recognize the presence or absence of the recording exclusion object or the like.

If the recording exclusion object has been clearly captured, this can be said that the recording exclusion object can be identified (specified) or easily identified based on the captured image. For example, as the distance between the onboard camera 20 and the recording exclusion object increases, the size (the number of pixels) of the recording exclusion object in the captured image of the onboard camera 20 decreases. In other words, as the distance between the onboard camera 20 and the recording exclusion object becomes greater, the recording exclusion object is less clearly captured in the captured image. For this reason, as an example, the distance between the onboard camera 20 and the recording exclusion object is used in the present embodiment to determine whether or not the recording exclusion object has been clearly captured. Moreover, the distance between the onboard camera 20 and the recording exclusion object can be a distance between the onboard camera 20 and the recording exclusion object in the forward/rearward direction of the vehicle V.

Specifically, the clarity determination unit 13 determines that the recording exclusion object has not been clearly captured when the distance between the onboard camera 20 and the recording exclusion object is greater than a predetermined distance threshold. Moreover, the clarity determination unit 13 determines that the recording exclusion object has been clearly captured when the distance between the onboard camera 20 and the recording exclusion object is less than or equal to the predetermined distance threshold. In addition, the clarity determination unit 13 can calculate (acquire) the distance between the onboard camera 20 and the recording exclusion object based on the measurement results of the distance measurement sensor 30. Moreover, the distance between the onboard camera 20 and the recording exclusion object is the distance between the onboard camera 20 and the recording exclusion object in the forward/rearward direction of the vehicle V.

The distance threshold used by the clarity determination unit 13 in making the determination may be defined based on the number of pixels in the vertical or horizontal direction of the recording exclusion object in the captured image. For example, the distance threshold may be set to a magnitude in which the number of pixels in the vertical or horizontal direction of the recording exclusion object becomes the predetermined number of pixels. In the present embodiment, as an example, it is assumed that the distance threshold is set based on the number of pixels in the horizontal direction of the recording exclusion object. Here, as an example, a distance at which the number of pixels in the horizontal direction of the recording exclusion object becomes a predetermined pixel count threshold in the image captured by the onboard camera 20 is set as the distance threshold.

The predetermined "pixel count threshold" for the number of pixels in the horizontal direction of the recording exclusion object is the number of pixels (the number of pixels in the horizontal direction of the recording exclusion object) that serves as a criterion for determining whether or not the recording exclusion object has been clearly captured. For example, if the number of pixels in the horizontal direction of the recording exclusion object in the captured image is greater than or equal to the predetermined pixel count threshold, it can be determined that the recording exclusion object has been clearly captured. If the number of pixels in the horizontal direction of the recording exclusion object in the captured image is less than the predetermined pixel count threshold, it can be determined that the recording exclusion object has not been clearly captured. This pixel count threshold is predefined to determine whether or not the recording exclusion object has been clearly captured.

Moreover, this pixel count threshold may be defined for each type of recording exclusion object. In the present embodiment, for example, the pixel count threshold may be defined for each of a human face serving as the recording exclusion object and a license plate serving as the recording exclusion object.

For example, depending on the performance (a resolution of a captured image) of the onboard camera 20, the recording exclusion object may be clearly captured or unclear even if the distance between the onboard camera 20 and the recording exclusion object is the same. For this reason, the distance threshold used to determine whether or not the recording exclusion object has been clearly captured is defined based on the pixel count threshold, which is the criterion for determining that the recording exclusion object has been clearly captured. Thereby, it is possible to set a distance according to the performance of the onboard cameras 20 as the distance threshold.

Thus, when the distance between the onboard camera 20 and the recording exclusion object is less than or equal to the distance threshold, the number of pixels in the horizontal direction of the recording exclusion object is greater than or equal to the pixel count threshold. Therefore, the clarity determination unit 13 determines that the recording exclusion object has been clearly captured. On the other hand, when the distance between the onboard camera 20 and the recording exclusion object is greater than the distance threshold (when they are far apart), the number of pixels in the horizontal direction of the recording exclusion object is less than the pixel count threshold. Therefore, the clarity determination unit 13 determines that the recording exclusion object has not been clearly captured.

Here, an example of a method of setting the distance threshold based on the pixel count threshold will be described. In other words, the distance threshold set here is the distance from the vehicle V to the recording exclusion object when the size (the number of pixels in the horizontal direction) of the recording exclusion object in the captured image is a boundary for determining whether or not the recording exclusion object has been clearly captured. In addition, the distance threshold is defined as the threshold of the distance in the forward/rearward direction of the vehicle V. Moreover, hereinafter, it is assumed that the onboard camera 20 uses a fisheye lens and the projection method of the

fisheye lens is orthogonal projection.

As shown in FIG. 2, the onboard camera 20 includes a fisheye lens 21 and an image sensor 22 that receives light collected by the fisheye lens. The light collected by the fisheye lens 21 enters a light-receiving surface 22a of the image sensor 22 in parallel. A recording exclusion object K is located diagonally to the right of the onboard camera 20. It is assumed that the horizontal width of the recording exclusion object is a width a [m].

Moreover, in the following example, as shown in FIG. 3, the captured image of the onboard camera 20 (the stored image stored in the storage unit 40) is compressed at a compression ratio $\alpha$ with respect to an original image. The original image is an image as it is detected by the image sensor 22 (an unprocessed image). In the present specification, the captured image of the onboard camera 20 is a stored image that is stored in the storage unit 40. Therefore, the captured image of the onboard camera 20 is an image after compression when the original image captured by the onboard camera 20 is compressed and stored. Moreover, the captured image of the onboard camera 20 is the original image itself captured by the onboard camera 20 when the original image is stored in the storage unit 40 without compression.

A horizontal size of the recording exclusion object K (a human face in FIG. 3) in the captured image of the onboard camera 20 (the stored image stored in the storage unit 40) is denoted by $q_w$ [pix], a horizontal width of the image sensor 22 is denoted by w [m], and the number of pixels in the horizontal direction of the image sensor 22 is denoted by W [pix]. In this case, the horizontal size $q_w$ [pix] of the recording exclusion object is obtained by the following formula (1).

$$q_w = \alpha f \frac{w}{W}\left(\frac{R_1}{\sqrt{L^2 + {R_1}^2}} - \frac{R_2}{\sqrt{L^2 + {R_2}^2}}\right) \qquad (1)$$

Here, $\alpha$ is the compression ratio.

The compression ratio $\alpha$ is (the number of horizontal (vertical) pixels in the stored image)/(the number of horizontal (vertical) pixels in the original image).

In the case of orthogonal projection, the size of the image projected onto the light-receiving surface 22a is maximized when the center of the recording exclusion object K is located on the optical axis of the onboard camera 20. Therefore, if $R_1$=a/2 and $R_2$=-a/2, the following formula (2) is valid.

$$q_w = \alpha f \frac{w}{W}\frac{a}{\sqrt{L^2 + \left(\frac{a}{2}\right)^2}} \qquad (2)$$

It is assumed that the pixel count threshold, which is the criterion for determining whether or not the recording exclusion object has been clearly captured, is set to b [pix]. The distance from the onboard camera 20 to the recording exclusion object K (i.e., the distance threshold $L_{th}$ [m]) when the horizontal size of recording exclusion object $q_w$ [pix] and the pixel count threshold b [pix] are consistent is expressed by the following formula (3).

$$L_{th} = a\sqrt{\left(\frac{\alpha f w}{Wb}\right)^2 - \frac{1}{4}} \qquad (3)$$

In addition, the method of setting the distance threshold based on the pixel count threshold described using FIGS. 2 and 3 is an example. The distance threshold can be set appropriately based on the pixel count threshold and the configuration of the onboard cameras 20.

The storage control unit 14 performs control for storing captured images of the onboard camera 20 in the storage unit 40 when the recording determination unit 12 determines that the image recording condition has been satisfied. In addition, the storage control unit 14 does not cause the storage unit 40 to store the captured image when the clarity determination unit 13 determines that the recording exclusion object has been clearly captured even if the recording determination unit 12 determines that the image recording condition has been satisfied.

For example, as shown in FIG. 4A, another vehicle VA is located in front of vehicle V. A distance L between the onboard camera 20 of the vehicle V and the recording exclusion object K (in this case, the license plate) of the other vehicle VA is greater than the distance threshold $L_{th}$ [m]. In this case, the clarity determination unit 13 determines that the recording exclusion object K of the other vehicle VA, has not been clearly captured. Therefore, the storage control unit 14 performs control for storing captured images of the onboard camera 20 in the storage unit 40 when the recording determination unit

12 determines that the image recording condition has been satisfied.

On the other hand, for example, as shown in FIG. 4B, it is assumed that the distance L between the onboard camera 20 of the vehicle V and the recording exclusion object K (in this case, the license plate) of another vehicle VA is less than or equal to the distance threshold $L_{th}$ [m]. In this case, the clarity determination unit 13 determines that the recording exclusion object K of the other vehicle VA has been clearly captured. Therefore, the storage control unit 14 does not perform control for storing captured images of the onboard camera 20 in the storage unit 40 even if the recording determination unit 12 determines that the image recording condition has been satisfied.

When the clarity determination unit 13 determines that the recording exclusion object has been clearly captured while control for storing captured images of the onboard camera 20 in the storage unit 40 is being performed, the storage control unit 14 stops control for storing the captured images in the storage unit 40. This case, for example, is a case where the distance between the vehicle V and the other vehicle VA is shortened as shown in FIG. 4B while control for storing the captured images of the onboard camera 20 in the storage unit 40 is being performed or the like. Here, the storage control unit 14 stops control for storing the captured images in the storage unit 40 when the distance L between the other vehicle VA and the recording exclusion object K is less than or equal to the distance threshold $L_{th}$ [m].

Moreover, when control for storing the captured images of the onboard camera 20 in the storage unit 40 is performed, the storage control unit 14 may store the captured images for a previous or subsequent predetermined period of time including a timing (period) when the image recording condition is determined to be satisfied. For example, the storage control unit 14 may temporarily store the captured images of the onboard camera 20 in the storage unit 40 and the like all the time, and delete the captured images earlier than a predetermined time before the present from the storage unit 40 and the like. Also, when it is determined that the image recording condition has been satisfied and it is determined that the recording exclusion object has not been clearly captured, the storage control unit 14 keeps the temporarily stored captured images for the previous predetermined period of time as they are without deleting the captured images. Also, the storage control unit 14 may subsequently store the captured images in the storage unit 40 for a predetermined amount of time.

Next, a flow of the recording process of captured images performed in the image recording device 100 will be described using the flowchart in FIG. 5. The process shown in FIG. 5 is initiated at a predetermined timing, such as when an ignition switch of the vehicle V is turned on. Moreover, when the process reaches the end, the process starts from the start after a predetermined time. As shown in FIG. 5, the clarity determination unit 13 calculates the distance L between the onboard camera 20 and the recording exclusion object on the basis of a measurement result of the distance measurement sensor 30 (S101).

The clarity determination unit 13 determines whether or not the distance L between the onboard camera 20 and the recording exclusion object is greater than the predetermined distance threshold $L_{th}$ (S102). When the distance L is greater than the distance threshold $L_{th}$ (S102: YES), the clarity determination unit 13 sets a recording permission flag to "permitted" (S103). The recording permission flag is a flag indicating whether or not the captured images of the onboard camera 20 are permitted to be stored in the storage unit 40. On the other hand, when the distance L is not greater than the distance threshold $L_{th}$ (S102: NO), the clarity determination unit 13 sets the recording permission flag to "unpermitted" (S107). After the processing of S103 or S107, the recording determination unit 12 determines whether or not the image recording condition has been satisfied (S104).

When the image recording condition has been satisfied (S104: YES), the storage control unit 14 determines whether or not the recording permission flag has been set to "permitted" (S105). When it has been set to "permitted" (S105: YES), the storage control unit 14 performs control for storing the captured images of the onboard camera 20 in the storage unit 40 (S106).

When it is determined that the image recording condition has not been satisfied in S 104 (S104: NO) or when the recording permission flag has been set to "non-permitted" in S105 (S105: NO), the process proceeds to the end.

As described above, in the image recording device 100, the clarity determination unit 13 determines whether or not the recording exclusion object has been clearly captured in the captured image. The storage control unit 14 does not cause the storage unit 40 to store the captured image when it is determined that the recording exclusion object has been clearly captured even if it is determined that the image recording condition has been satisfied. When it is determined that the image recording condition has been satisfied and the recording exclusion object has not been clearly captured, the storage control unit 14 causes the storage unit 40 to store the captured image. Thus, the image recording device 100 causes the storage unit 40 to store the captured image according to whether or not the recording object has been clearly captured. Thereby, the image recording device 100 can record captured images while considering the privacy of the recording exclusion object.

For example, if the distance from the onboard camera 20 to the recording exclusion object is far, the recording exclusion object in the captured image is likely to be unclear. Therefore, by using the distance between the onboard camera 20 and the recording exclusion object, the image recording device 100 can more appropriately determine whether or not the recording exclusion object has been clearly captured.

The distance threshold used to determine whether or not the recording exclusion object has been clearly

captured can be defined based on the number of pixels in the vertical or horizontal direction of the recording exclusion object in the captured image. For example, even if the distance from the onboard camera to the recording exclusion object is the same, the recording exclusion object may be clearly captured or unclear according to the performance of the onboard camera. For this reason, the clarity determination unit 13 uses a distance threshold defined based on the number of pixels of the recording exclusion object in the captured image. Thereby, the image recording device 100 can determine whether or not the recording exclusion object has been clearly captured and record the captured image using a distance threshold defined in consideration of the performance of the onboard camera 20.

While the storage control unit 14 is performing control to cause the storage unit 40 to store the captured image, the clarity determination unit 13 may determine that the recording exclusion object has been clearly captured. In this case, the storage control unit 14 stops the control for storing the captured images in the storage unit 40. Thereby, the image recording device 100 can switch between the presence and absence of recording of the captured image in accordance with a change in the clarity degree of the recording exclusion object in the captured image.

Human faces and license plates of other vehicles are set as the recording exclusion object. In this case, the image recording device 100 does not record the captured image captured in a state in which a human face and a license plate of another vehicle are clear, thus protecting their privacy.

The recording determination unit 12 determines whether or not the image recording condition for recording the captured image of the onboard camera 20 has been satisfied. As this image recording condition, an operation condition for a driving assistance function related to the steering or speed of the vehicle V may be set. In this case, the image recording device 100 can record the captured images so that the external situation at the time of operation of the driving assistance function can be confirmed later, while considering the privacy of the recording exclusion object. In addition to the operation condition of the driving assistance function, various other conditions can be set as image recording conditions when an SOS signal is transmitted or the like. Thereby, the image recording device 100 can record the captured images so that the external situation at the time these conditions are satisfied can be confirmed later, while considering the privacy of the recording exclusion object.

While embodiments of the present disclosure have been described above, the present disclosure is not limited to the above-described embodiments. For example, various changes can be made in accordance with the subject matter of the present disclosure.

## Claims

**1.** An image recording device (100) that is mounted on a vehicle (V) and records captured images of surroundings of the vehicle (V) captured by an onboard camera, the image recording device (100) comprising:

a recording determination unit (12) configured to determine whether or not an image recording condition for recording the captured image has been satisfied based on a situation of the vehicle (V);
a clarity determination unit (13) configured to determine whether or not a recording exclusion object (K) included in the captured image has been clearly captured; and
a storage control unit (14) configured to perform control for storing the captured image in a storage unit (40) when the recording determination unit (12) determines that the image recording condition has been satisfied,
wherein the storage control unit (14) does not cause the storage unit (40) to store the captured image when the clarity determination unit (13) determines that the recording exclusion object (K) has been clearly captured even if the recording determination unit (12) determines that the image recording condition has been satisfied.

**2.** The image recording device (100) according to claim 1, wherein the clarity determination unit (13) determines that the recording exclusion object (K) has not been clearly captured when a distance between the onboard camera and the recording exclusion object (K) is greater than a predetermined distance threshold and determines that the recording exclusion object (K) has been clearly captured when the distance between the onboard camera and the recording exclusion object (K) is less than or equal to the predetermined distance threshold.

**3.** The image recording device (100) according to claim 2, wherein the distance threshold is defined based on the number of pixels in at least one of vertical and horizontal directions of the recording exclusion object (K) in the captured image.

**4.** The image recording device (100) according to claim 1, wherein the storage control unit (14) stops control for storing the captured image in the storage unit (40) when the clarity determination unit (13) determines that the recording exclusion object (K) has been clearly captured while control for storing the captured image in the storage unit (40) is being performed.

**5.** The image recording device (100) according to claim 1, wherein the recording exclusion object (K) is a human face or a license plate of another vehicle (VA).

**6.** The image recording device (100) according to claim 1, wherein the image recording condition is an operation condition for a driving assistance function related to steering or a speed of the vehicle (V).

Fig.1

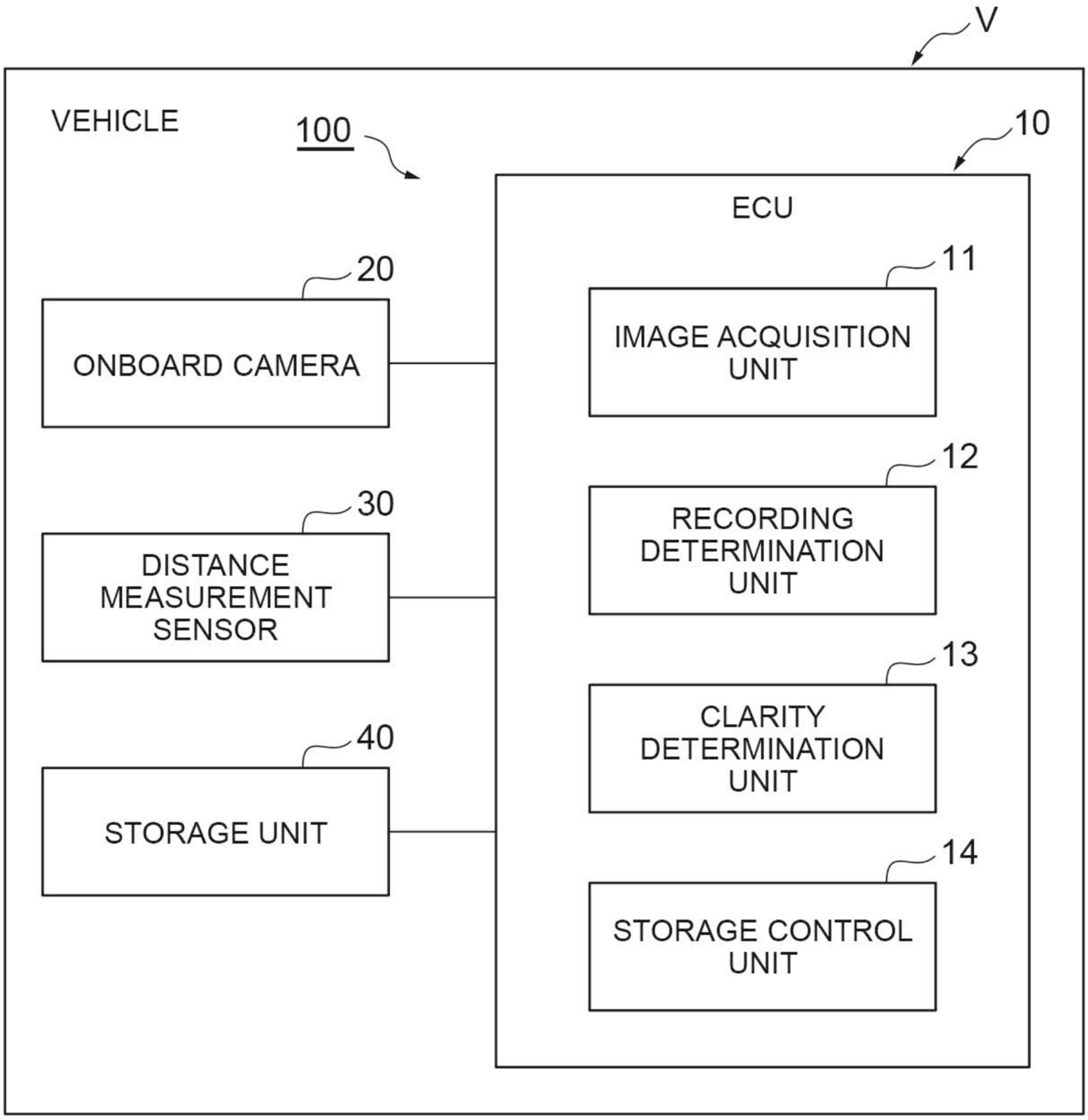
V
VEHICLE
100
10
ECU
20
ONBOARD CAMERA
11
IMAGE ACQUISITION UNIT
12
RECORDING DETERMINATION UNIT
30
DISTANCE MEASUREMENT SENSOR
13
CLARITY DETERMINATION UNIT
40
STORAGE UNIT
14
STORAGE CONTROL UNIT

*Fig.2*

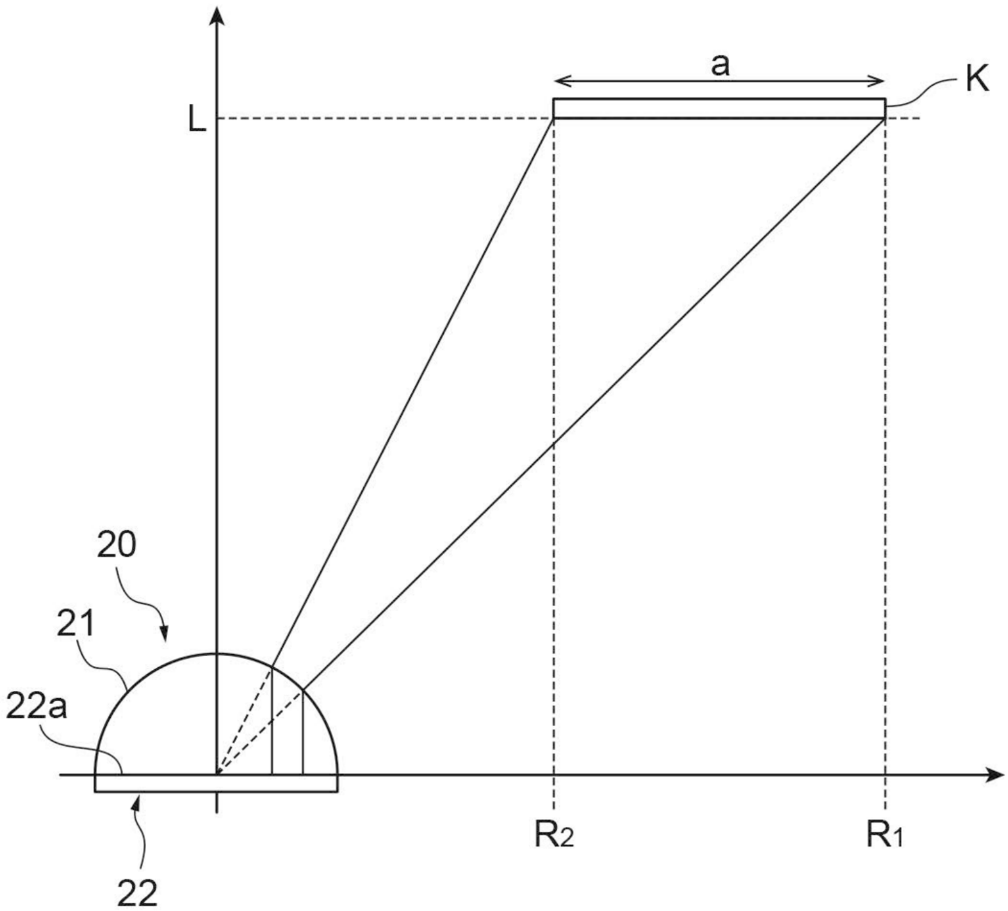

*Fig.3*

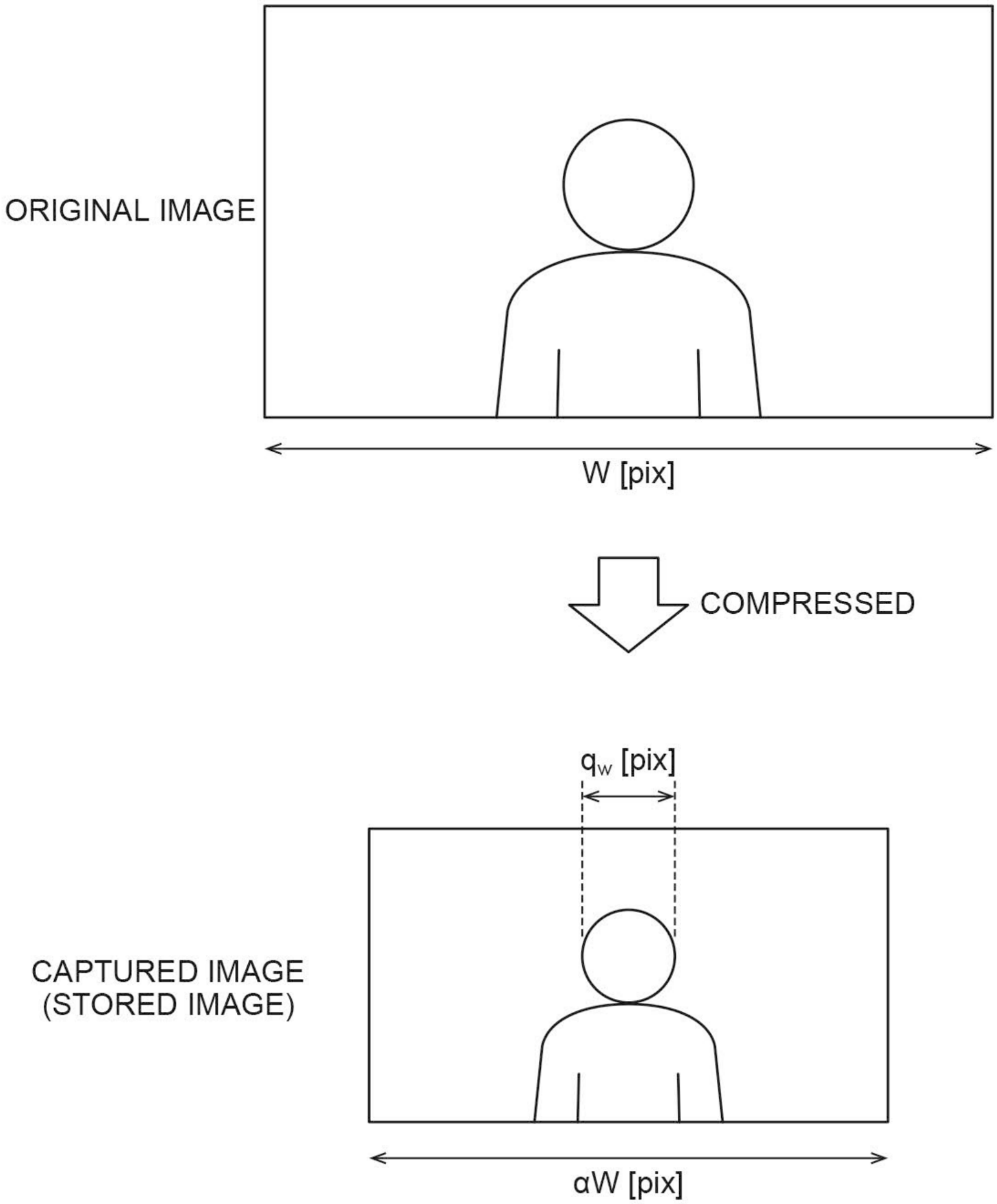
ORIGINAL IMAGE
W [pix]
COMPRESSED
$q_w$ [pix]
CAPTURED IMAGE
(STORED IMAGE)
αW [pix]

Fig.4A

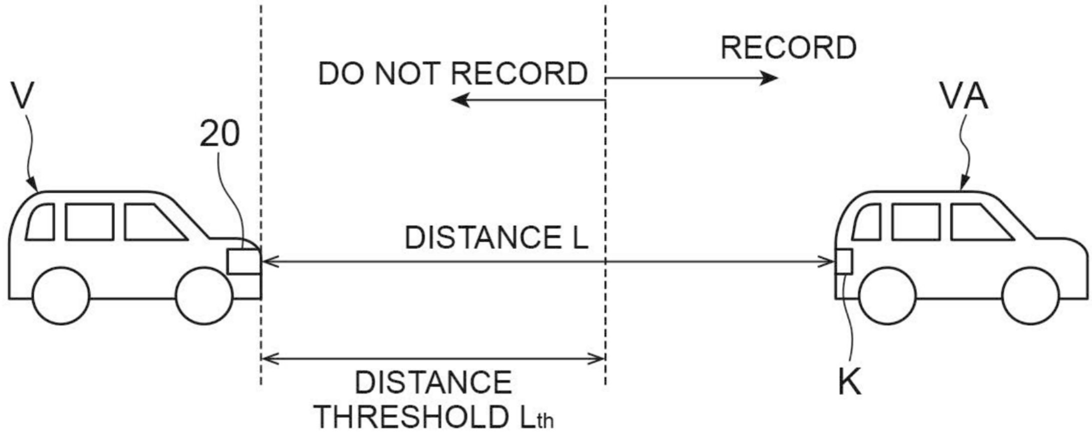
RECORD
DO NOT RECORD
V
VA
20
DISTANCE L
K
DISTANCE
THRESHOLD Lth

Fig.4B

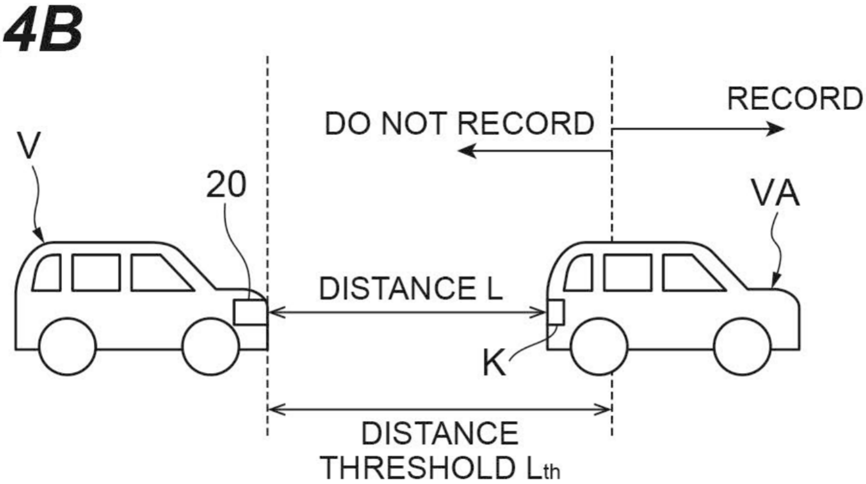
RECORD
DO NOT RECORD
V
20
VA
DISTANCE L
K
DISTANCE
THRESHOLD Lth

Fig.5

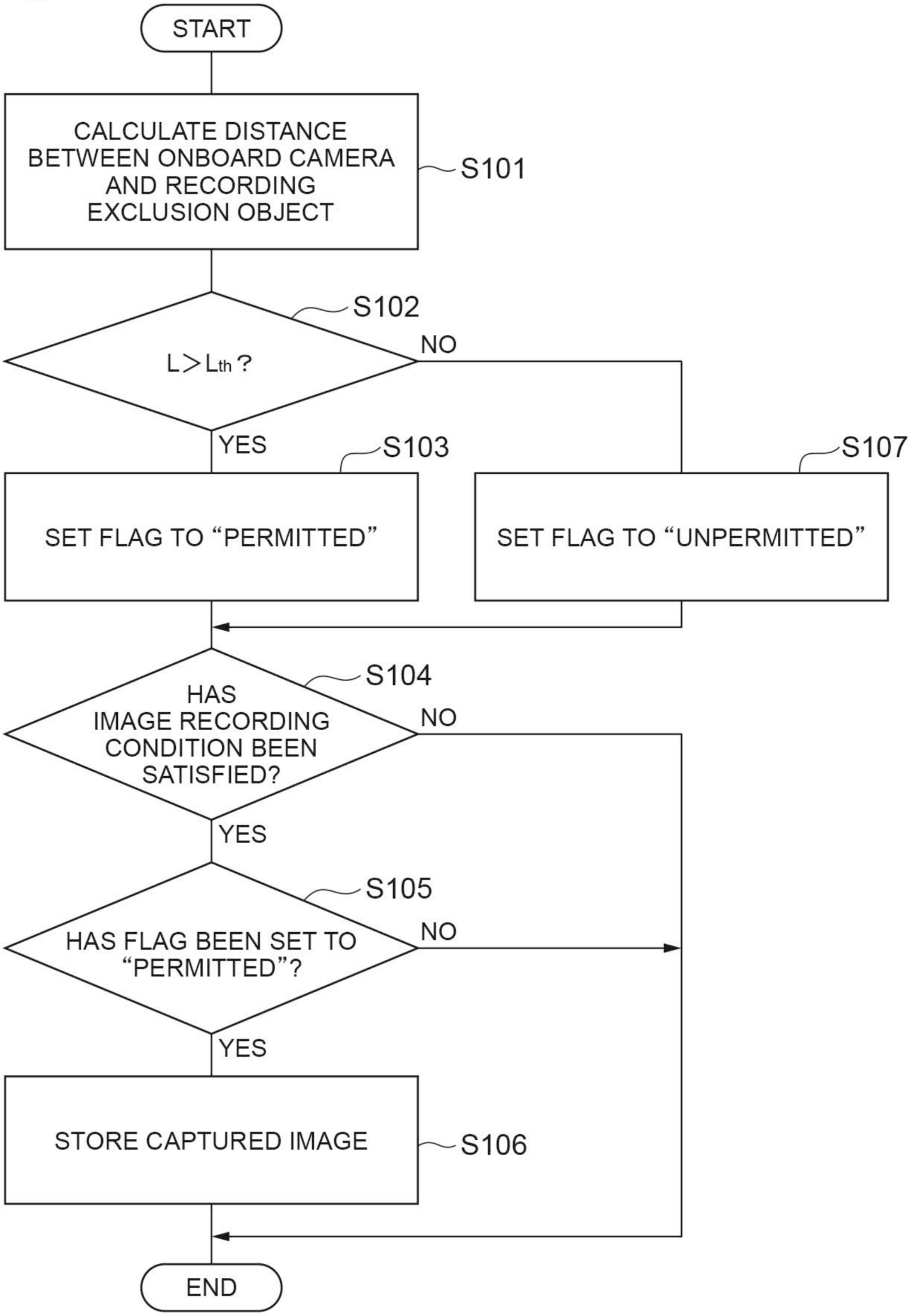
START
CALCULATE DISTANCE BETWEEN ONBOARD CAMERA AND RECORDING EXCLUSION OBJECT
S101
S102
L > $L_{th}$ ?
NO
YES
S103
S107
SET FLAG TO “PERMITTED”
SET FLAG TO “UNPERMITTED”
S104
HAS IMAGE RECORDING CONDITION BEEN SATISFIED?
NO
YES
S105
HAS FLAG BEEN SET TO “PERMITTED”?
NO
YES
STORE CAPTURED IMAGE
S106
END

Europäisches Patentamt
European Patent Office
Office européen des brevets

# EUROPEAN SEARCH REPORT

Application Number
EP 25 21 6898

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2011/043341 A1 (KUMAGAMI YUSUKE [JP]) 24 February 2011 (2011-02-24)<br>* paragraphs [0005] - [0007], [0041] - [0046]; figure 7 *<br>----- | 1-6 | INV.<br>G06V20/56<br>G06V20/58 |
| Y | US 2021/067742 A1 (MIKI YOSHIKUNI [JP] ET AL) 4 March 2021 (2021-03-04)<br>* paragraphs [0034], [0040], [0061], [0067], [0072], [0073], [0076], [0098], [0099]; figures 2-4,9 *<br>----- | 1-6 | |
| A | Miraoui Yanis ET AL: "Enhancing Privacy: Automated Detection and Blurring of Sensitive Information in Images and Video Feeds",<br>,<br>1 April 2024 (2024-04-01), pages 1-9, XP093380817,<br>Retrieved from the Internet:<br>URL:https://cs231n.stanford.edu/2024/papers/enhancing-privacy-automated-detection-and-blurring-of-sensitive-.pdf<br>[retrieved on 2026-03-24]<br>* Section 3 *<br>----- | 1-6 | |

| TECHNICAL FIELDS SEARCHED (IPC) |
|---|
| G06V |

The present search report has been drawn up for all claims

1

| Place of search | Date of completion of the search | Examiner |
|---|---|---|
| The Hague | 25 March 2026 | Meurisse, Wim |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.....................................................................
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 25 21 6898

This annex lists the patent family members relating to the patent documents cited in the above-mentioned European search report. The members are as contained in the European Patent Office EDP file on
The European Patent Office is in no way liable for these particulars which are merely given for the purpose of information.

25-03-2026

| Patent document cited in search report | Publication date | Patent family member(s) | Publication date |
|---|---|---|---|
| US 2011043341 A1 | 24-02-2011 | CN 101998113 A | 30-03-2011 |
| | | JP 5210994 B2 | 12-06-2013 |
| | | JP 2011039983 A | 24-02-2011 |
| | | US 2011043341 A1 | 24-02-2011 |
| US 2021067742 A1 | 04-03-2021 | JP 7300349 B2 | 29-06-2023 |
| | | JP 2021039619 A | 11-03-2021 |
| | | US 2021067742 A1 | 04-03-2021 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2024210991 A
- JP 2023180929 A